# EUROPEAN PATENT APPLICATION

(11) **EP 4 683 211 A1**
(43) Date of publication of application: **21.01.2026**
(21) Application number: 25190353.0
(22) Date of filing: 18.07.2025
(51) Int. Cl.: H02P 29/028, H02P 25/18, H02P 29/024, E05F 15/603

(54) **ELECTRONIC POWER SYSTEM FOR A BRUSHLESS ELECTRICAL MOTOR PROVIDED WITH A FAIL-SAFE CIRCUIT**

(30) Priority: 19.07.2024 IT 202400016777
(71) Applicant: FAAC S.p.A., 40069 Zola Predosa (BO) (IT)
(72) Inventor: TURCHETTI, Claudio, 40033 Casalecchio di Reno (BO) (IT)
(74) Representative: Di Gennaro, Sergio

(57) **Abstract**

Power system for a three-phase brushless motor (M), comprising: a normal operating driving circuit (inverter) (1) of the motor, an emergency driving circuit (inverter) (2) of said motor, a control circuit (3) which manages the communication between the two driving circuits and their connection to the motor via a group of connection switches (4). Both the normal operating and emergency driving circuits by powering each phase (A, B, C) of the three-phase motor with a star or delta connection. In the presence of an engine operating anomaly, the control circuit detects such anomaly through a message of incorrect operation to the control circuit, which in turn activates the connection switches (4), which switch by disconnecting from the motor (M) the normal operating driving circuit and connect the emergency driving circuit (2) in its place.

## Description

The present invention relates to an electronic power system for a brushless electrical motor, in particular for a permanent magnet synchronous motor (PMSM) provided with a fail-safe circuit.

In particular, the present invention relates to an electronic power system for a brushless motor, wherein, in the case of a fault in one of the power supply phases of the motor, a fail-safe circuit intervenes, allowing the motor to resume its operation (i.e., its rotation) in a temporary operating condition.

A permanent magnet synchronous motor (PMSM) is an alternating-current synchronous motor, whose field excitation is provided by permanent magnets, and is brushless. As a brushless DC motor, it is provided with a permanent magnet rotor and windings on the stator. However, the structure with windings of the stator is made so as to produce a sinusoidal flux density in the air gap of the machine. The power density is higher compared to induction motors with the same ratings, since there is no stator power dedicated to producing the magnetic field.

Typically, the power is three-phase sinusoidal (phases A, B, and C at 120°), so the windings on the ring-shaped stator are three, arranged at 120° from each other, and each winding is powered by a sinusoidal phase.

In particular, since the electrical energy generally has a three-phase distribution (because it is that enabling the highest power transport for the same copper conductor section), it allows a PMSM motor to be connected directly to the network.

The number of phases can also be different. The increasing focus on safety has led to the spread of five-phase motors, especially in avionics and automotive sector. The phases and windings can also be greater in number, for example six; in this case, the stator windings are six, arranged in a ring shape at 60° from each other, and each powered by a sinusoidal alternating current, such currents between one winding and its adjacent one are out of phase by 60°.

The probability of a fault on multiple phases (or the driving circuits) is clearly non-zero. The required safety level in different fields guides the selection of the most adapted configuration, considering the fact that, as the number of phases increases, the circuit complexity, and consequently the probability of a fault, also increase.

In the field to which the present invention pertains, that is, that of the automation of doors, or generally barriers, when used for escape routes, regulations require that following any electrical fault, the full opening of the sashes still occurs. Therefore, in some way, at least one of the electrical motors powering the door or automated barrier must operate for a short period of time so as to allow safety by fully opening the sashes.

This requirement is currently addressed by making the opening system redundant. This function is currently made in two different ways.

The first, the most direct, consists in the redundancy of both the driving electronic part and the motor. In other words, two distinct motors are used, each of which is driven by its own control electronics.

A second mode consists in using a single motor, but with two distinct windings, each of which is controlled by a dedicated electronic circuit. This solution allows cost savings compared to the former, since it substantially has only one mechanical part.

The present invention aims to find a solution that complies with the mentioned safety standards of the sashes without needing to adopt solutions such as those of the prior art, which propose both cost and engineering issues as indicated above.

In order to make the system, which is the object of the present invention, the applicant observed that a three-phase motor, in the event of a loss of power to a phase (which is one of the most frequent faults in a motor of such type) can still achieve the rotation of the engine itself using only two active phases, by properly driving such phases and/or the star point voltage.

An aspect of the present invention relates to an electronic power system for a brushless electrical motor provided with a fail-safe circuit, having the features of the attached claim 1.

Further features of the present invention are contained in the dependent claims. The features and advantages of the present invention will become more apparent from the following exemplary and non-limiting description of an embodiment of the invention, referred to the attached schematic drawings, in which:

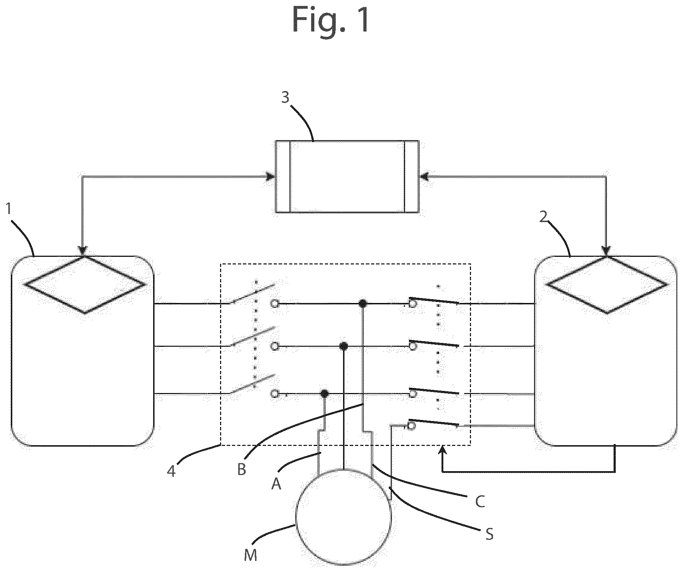

- Figure 1 illustrates a block scheme of the driving and power system according to the present invention;
- Figures 2 and 5 illustrate an electrical scheme of the normal operating driving circuit of the motor and the emergency driving circuit of the motor;
- Figure 3 shows a graph of the voltages of the two phases and of the star point connection powered by the emergency driving circuit according to the present invention;
- Figure 4 shows a graph of the resulting voltages of the two phases added to the star point voltage according to the present invention.

With reference to the mentioned figures, the power system for a three-phase brushless motor M comprises a normal operating driving circuit (inverter) 1 of the motor, an emergency driving circuit (inverter) 2 of said motor, and a control circuit 3 which manages the communication between the two driving circuits and their connection to the motor via a group of connection switches 4. In particular, the two driving circuits communicate through an appropriate communication bus.

Both the illustrated normal operating and emergency driving circuits power each phase A, B, and C of the three-phase motor with a star or delta connection. The driving circuit is capable of switching the connection from star to delta or vice versa under any condition.

In the presence of an engine operating anomaly, for example due to a fault on a motor winding (a more frequent event), or a fault of the normal operating driving circuit 1 (for example, a short circuit or the failure of an integrated circuit), the control circuit detects such anomaly through a message of incorrect operation to the control circuit, which in turn activates the connection switches 4, which switch by disconnecting from the motor M the normal operating driving circuit and connect the emergency circuit 2 in its place.

Said connection switches comprise four diverter relays RL1-RL4, of which the first three, RL1-RL3, alternately connect the three phases of the motor to the normal operating driving circuit or the emergency driving circuit, and the fourth, RL4, connects the star point connection to the emergency driving circuit or keeps it isolated during normal engine operation.

Such four diverter relays RL1-RL4, when powered (normally open condition, NO), connect the normal operating driving circuit to the motor and keep the star point connection S isolated. Instead, when they are not powered (NC condition), the diverter relays RL1-RL4 connect the emergency driving circuit to the motor and to the star point connection S.

In the case where the engine operating anomaly is due to the absence of a power supply phase, the emergency driving circuit, in order to still allow the rotation of the engine by the remaining two phases, powers them with alternating voltages out of phase with each other by 60 degrees; this allows the three-phase asynchronous motor to rotate even in the absence of a phase.

Preferably, such two sinusoidal signals 60 degrees out of phase with each other are obtained by means of providing an electrical signal to the electrical connection of star point S, which are activated when one of the power supply phases of the motor M suffers a fault.

Such star point electrical signal is preferably an alternating signal, even more preferably a trapezoidal wave or a square wave.

The control circuit therefore allows the emergency driving to supply power to the two active phases and to the star point connection, while keeping the phase which suffered the fault isolated, by switching the connection switch related to that phase.

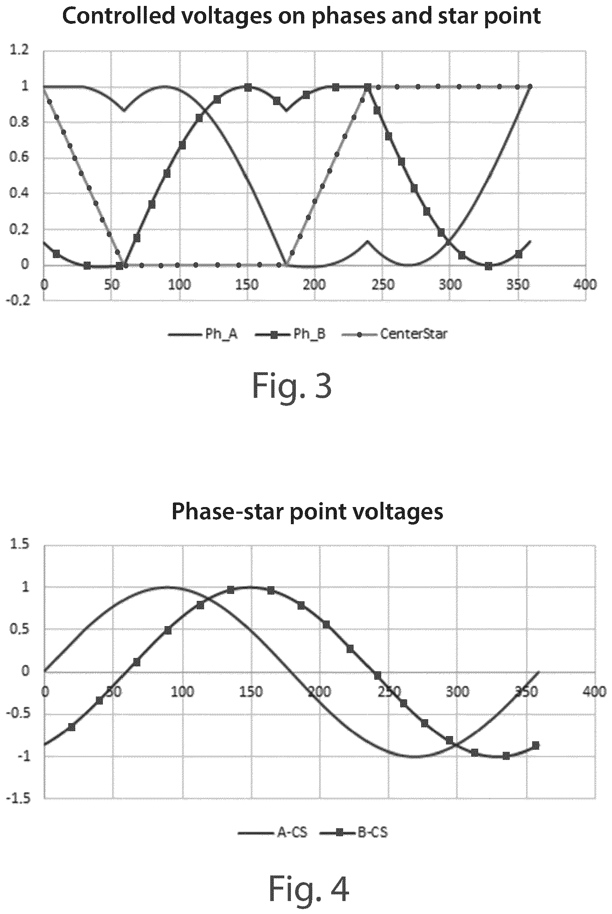

Figures 3 and 4 illustrate an example of a voltage signal imparted to the star point. In particular, Figure 4 highlights how, with the voltage imparted to the star point, the voltages of the two active phases, due to the contribution of such star point voltage, become out of phase by 60 degrees (instead of 120 degrees, as in normal operation), and this allows the motor to rotate even in the absence of a phase.

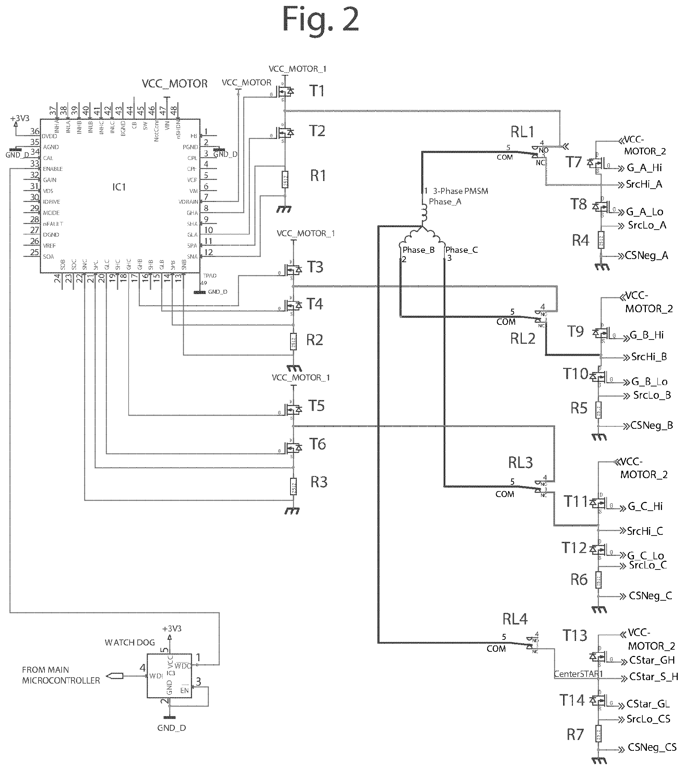

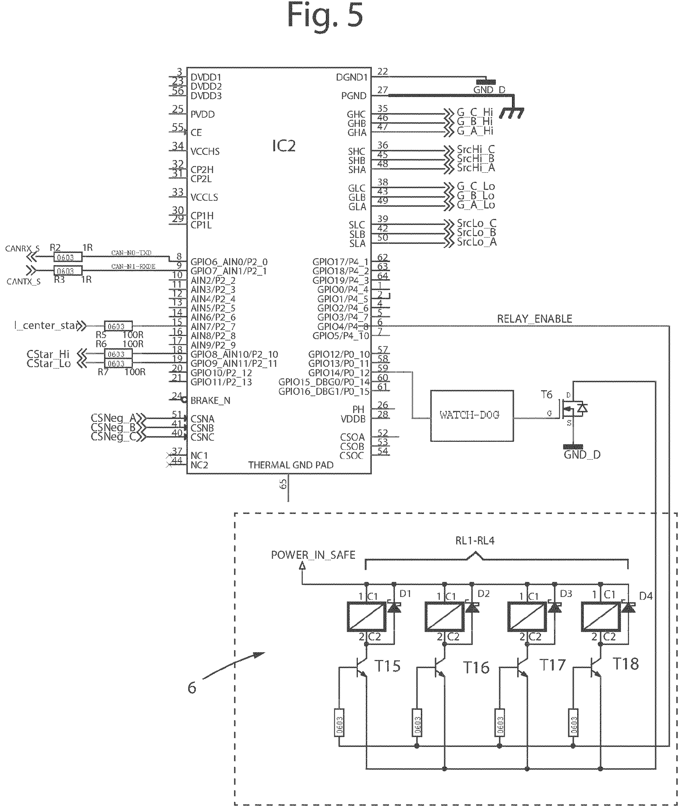

Figures 2 and 5 highlight a possible electrical scheme of the normal operating and emergency driving circuits.

In particular, the normal operating driving circuit comprises a first driving integrated IC1 and three pairs of transistors/switches T1-T2, T3-T4, and T5-T6 (for example, MOSFETs) which operate as inverters and are adapted to power each pair to one of the phases A, B, and C of the motor M. The integrated circuit controls the base (gate) of each transistor/switch

The function of the ideal inverter driving circuit is to provide the motor with a set of three alternating voltages with a sinusoidal trend, being out of phase with each other by 120°. This is achieved by properly managing the three pairs of transistors/switches T1-T2, T3-T4, and T5-T6 according to algorithms that make the motor voltages as close as possible to a sinusoidal wave.

The input to the inverter is a direct current voltage (DC Link) usually obtained from the power electrical network via a rectifier and a suitable capacitance smoothing capacitor, which serves to keep the VDC voltage at its ends substantially constant.

The normal operating driving circuit further comprises three resistances R1, R2, and R3, each placed in series with the respective pair of switches, R1 for T1-T2, R2 for T3-T4, and R3 for T5-T6.

Such resistances are used by the integrated circuit IC1, and therefore also by the control circuit 3, to perform the fault detection on the windings of the three phases.

The emergency driving circuit comprises a second driving integrated IC2 and four pairs of switches T7-T8, T9-T10, T11-T12, and T13-T14 (for example, MOSFETs) which operate as inverters similarly to the normal operating driving circuit 1.

The first three pairs T7-T8, T9-T10, T11-T12 are adapted to power one of the phases U, V, and W of the motor M for each pair, and the fourth pair T13-T14 powers the electrical connection of star point S.

The emergency driving circuit further comprises four resistances R4, R5, R6, and R7, each placed in series with the respective pair of switches, R4 for T7-T8, R5 for T9-T10, R6 for T11-T12, and R7 for T13-T14.

The resistances R4-R6 are used by the integrated circuit IC2, and therefore also by the control circuit 3, to perform the fault detection on the windings of the three phases.

According to the present invention, the emergency driving circuit 2 also includes a control circuit 6 for switching the relays RL1-RL4. Such circuit comprises four transistors/switches T15-T18 placed in series with the relays themselves, whose bases, which trigger the conduction of the transistors themselves allowing the relays to be powered, are connected to an enabling signal generated by the integrated circuit IC2. In this way, the emergency driving circuit itself, once received the anomaly signal from the control circuit 3, determines the switching of the relays which connect the motor to the emergency driving circuit itself, disconnecting the motor from the normal operating driving circuit.

## Claims

1. Power system for a three-phase brushless motor (M) comprising
• a circuit driving normal operation (1) of the motor,
• an emergency driving circuit (2) of said motor
• a control circuit (3) which manages the communication between the two driving circuits and their connection to the motor via a group of connection switches (4),
• both the normal operating and emergency driving circuits by powering each phase (A,B,C) of the three-phase motor with a star or delta connection,
**characterized in that** in the presence of an engine operating anomaly, the control circuit detects this anomaly through a message of incorrect operation to the control circuit, which in turn activates the connection switches (4) which switch by disconnecting from the motor (M) the normal operating driving circuit and connect the emergency circuit (2) in its place.

2. System according to claim 1, wherein by operating anomaly is meant a fault on a motor winding, or a fault in the driving circuit (1) in normal operation.

3. System according to claim 1, in which said connection switches comprise four diverter relays (RL1, RL2, RL3, RL4) of which the first three (RL1, RL2, RL3) alternately connect the three phases of the motor to the driving circuit of normal operation or to the emergency driving circuit and the fourth relay (RL4) connects the star point connection to the emergency driving circuit, or keeps it isolated during normal engine operation.

4. System according to claim 2, in which if the engine operating anomaly is due to the absence of a power supply phase to allow the rotation of the engine with the two remaining phases, the emergency circuit powers the two phases remaining active with alternating voltages out of phase with each other by 90 degrees.

5. System according to claim 4, wherein such two sinusoidal signals 60 degrees out of phase with each other are obtained by means of providing an electrical signal to the electrical connection of star center (S).

6. System according to claim 5, wherein such star center electrical signal (S) is an alternating signal, preferably a trapezoidal wave or a square wave.

7. System according to claim 3, in which these four diverter relays (Rl1, RL2, RL3, RL4) when powered in a normally open condition (NO) connect the normal operating driving circuit to the motor and keep the star center (S) isolated, while when they are not powered (NC) they connect the emergency driving circuit to the motor and to the star point connection (S).

8. System according to claim 3, wherein the emergency driving circuit (2) also includes a control circuit (6) for switching the relays (RL1, RL2, RL3, RL4).
